Europäisches Patentamt

European Patent Office

Office européen des brevets

(11) Veröffentlichungsnummer: **0 126 031**
**A2**

(12) **EUROPÄISCHE PATENTANMELDUNG**

(21) Anmeldenummer: **84810224.0**

(22) Anmeldetag: **09.05.84**

(51) Int. Cl.³: **G 01 N 21/35**
**G 01 N 21/53**

(30) Priorität: **09.05.83 CH 2531/83**

(43) Veröffentlichungstag der Anmeldung:
**21.11.84 Patentblatt 84/47**

(84) Benannte Vertragsstaaten:
**AT BE CH DE FR GB IT LI LU NL SE**

(71) Anmelder: **Franz Rittmeyer AG**
**Postfach Grienbachstrasse**
**CH-6300 Zug 2(CH)**

(72) Erfinder: **Ulrich, Reinhard**
**Alte Rennbahn 2**
**D-2110 Bucholz(DE)**

(74) Vertreter: **White, William et al,**
**PATENTANWALTS-BUREAU ISLER AG Postfach 6940**
**Walchestrasse 23**
**CH-8023 Zürich(CH)**

(54) **Sonde zur Überwachung der Trübung in Medien und Verwendung derselben.**

(57) Die Sonde (1) ist als schlanker Körper mit zwei Lichtleitkörpern (11, 12) und dazwischenliegendem lichtundurchlässigem Mittelteil (10) ausgebildet. An der zur Längsachse senkrechten Fläche (111) des einen Lichtleitkörpers (11) befindet sich eine Lichtquelle (13). An der entsprechenden Fläche (121) des anderen Lichtleitkörpers (12) befindet sich ein Lichtempfänger (14). Im Strahlengang der Lichtleitkörper (11, 12) befindet sich je eine Grenzfläche (112, 122), an der das von der Lichtquelle (13) abgegebene Licht gebrochen wird. Dadurch kann ein zum Mittelteil (10) paralleler Strahlengang erzeugt werden, der durch Brechung an der Grenzfläche (122) des zweiten Lichtleitkörpers (12) auf einen Punkt konzentriert wird. Durch die Formgebung wird eine dauernde Abspülung der Oberfläche bewirkt, so dass keine Schmitzpartikeln anhaften können.

Fig. 1

- 1 -

Franz Rittmeyer AG

---

Sonde zur Ueberwachung der Trübung in

Medien und Verwendung derselben

---

Die vorliegende Erfindung betrifft eine Sonde zur Ueberwachung

der Trübung in Medien gemäss dem Oberbegriff des unabhängigen Patentanspruchs 1, sowie eine Verwendung gemäss dem Oberbegriff des unabhängigen Patentanspruchs 10.

Die Trübung einer Flüssigkeit durch gelöste oder suspendierte Stoffe wird bekanntlich auf optischem Weg durch Messung des Transmissionsvermögens oder des Lichtstreuvermögens bestimmt.

Bei der Messung der Transmission wird die Schwächung eines durch die zu überwachende Flüssigkeit geleiteten Lichtbündels erfasst. Je grösser die Trübung desto geringer ist die Lichtintensität beim Lichtempfänger. Anders verhält es sich bei der Lichtstreuung, hier wird die Lichtintensität unter einem bestimmten Winkel zur Richtung des Lichtbündes gemessen, je mehr streuende Partikeln sich im Strahlengang befinden, umso grösser ist die empfangene Lichtintensität.

Eine Vorrichtung zur Messung der Trübung auf der Basis der Absorption von Licht ist beispielsweise in der CH-A 567 721 beschrieben. Dabei wird ein Messstrahlengang alternierend durch das zu messende Medium oder ein Referenzmedium geleitet und von jedem der beiden Strahlengänge die Lichtabsorption bestimmt und ausgewertet.

Ein Beispiel für die Messung der Lichtstreung findet sich in der CH-A 557 535. Durch Gas in einer Streukammer wird ein Strahlenbündel hindurchgeschickt, das durch die im Gas vorhandenen Partikeln gestreut wird und das gestreute Licht wird mittels einer lichtempfindlichen Zelle erfasst.

Die Vorteile beider Methoden liegen darin, dass kontinuierliche Messungen in einer strömenden Flüssigkeit durchgeführt werden. Ein Problem ergibt sich bei der Messung in Abwässern aller Art, weil diese gröbere Abfallstoffe mit unterschiedlicher Konsistenz und Grösse enthalten kommen. Eine Messung mittels einer Küvette gemäss der CH-A 534 355 eignet sich somit wenig, weil der Reflektor bald durch diese Abfallstoffe überdeckt ist und daher keine Resultate bezüglich der Trübung im Medium mehr erhältlich sind.

Eine Eintauchsonde ist beispielsweise in der CH-A 546 403 beschrieben. Bei dieser Sonde wird ebenfalls ein Strahlengang durch das Medium mit einem Strahlengang innerhalb der Sonde zum Vergleich herangezogen. Die Sonde ist an einem Stab befestigt und wird für jede Messung in die Flüssigkeit eingetaucht. Damit besteht das Problem mit zunehmender Verschmutzung bei längerem Verbleib nicht, indem die Sonde jedesmal gereinigt werden kann.

Es ist eine Aufgabe der Erfindung eine Sonde zu schaffen, die in das Medium eingetaucht bleiben kann und bei der die Verschmutzung durch im Medium mitgeführte Unreinigkeiten auf ein Minimum reduziert ist, so dass sich die Sonde zur Messung der Trübung in Abwässern eignet.

Erfindungsgemäss wird dies durch die Merkmale im kennzeichnenden Teil des unabhängigen Patentanspruchs 1 erreicht. Eine besonders vorteilhafte Verwendung ist im Patentanspruch 10 angegeben. In den abhängigen Patentansprüchen sind besonders vorteilhafte Ausbildungsformen beschrieben.

- 4 -

Ausführungsbeispiele der Erfindung werden nachfolgend anhand
der Zeichnung erläutert. Es zeigen:

Fig. 1    eine Schnittansicht gemäss einem Längsschnitt durch
          eine erste Ausführungsform der Erfindung,

Fig. 2    eine ähnliche Schnittansicht wie in Fig. 2 durch
          eine zweite Ausführungsform der Erfindung,

Fig. 3    eine Schnittansicht wie Fig. 1 einer dritten Ausführungsform,

Fig. 4 und 4a    eine Schnittansicht wie Fig. 1 einer vierten
                 Ausführungsform neben einer Draufsicht auf
                 den Lichtempfänger

Fig. 5    eine Schnittansicht wie Fig. 1 einer fünften Ausführungsform,

Fig. 6    eine Schnittansicht wie Fig. 1 einer sechsten Ausführungsform

Fig. 7 und 8    Ansichten einer in einen Abwasserkanal eingebauten Sonde nach der Erfindung, und

Fig. 9    ein Blockschema zum Betrieb einer Sonde nach der Erfindung.


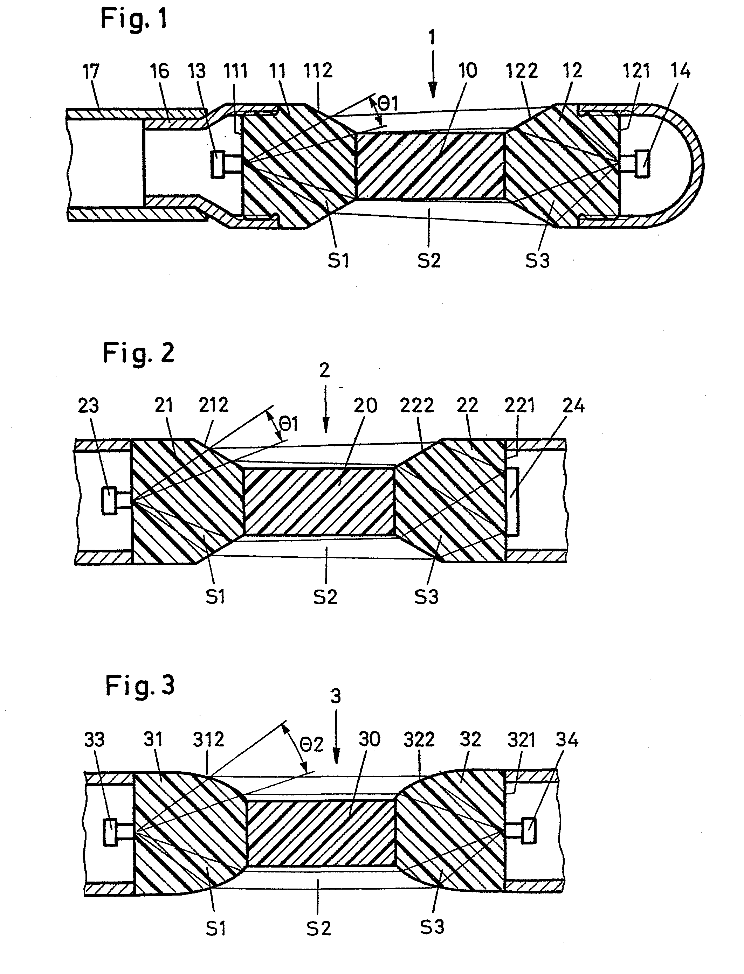

Die Sonde 1 gemäss Fig. 1 besteht aus einem zylindrischen Mittelteil 10 aus einem lichtundurchlässigen Stoff oder einem schwach lichtdurchlässigen Stoff, beispielsweise einem Kunststoff. Beidseits dieses Mittelteils 10 sind Lichtleitkörper 11, 12 mit dem Mittelteil 10 einstückig verbunden.

Diese Lichtleitkörper 11, 12 bestehen im Gegensatz zum Mittelteil 10 aus gut lichtdurchlässigem Material, wie Plexiglas, Akrylglas oder dergleichen. Bei einem Lichtleitkörper 11 befindet sich eine Lichtquelle 13 an einer Fläche 111, die senkrecht auf der Längsachse steht. Beim anderen Lichtleitkörper 12 befindet sich in gleicher Anordnung ein Lichtempfänger 14 auf der Fläche 121.


Ein Teil der von der Lichtquelle 13 abgegebenen Lichtstrahlen

S1 werden an der kegelmantelförmig ausgebildeten Austrittsfläche 112 gebrochen und gelangen schwach divergierend durch das Medium, in dem die Trübung zu messen ist, zum anderen Lichtleitkörper 12. Hier geschieht genau das Umgekehrte. Die auf der Eintrittsfläche 122 auftreffenden Lichtstrahlen S2 werden zum Einfallot hin gebrochen. Im Konzentrationsgebiet der Strahlen ist der Lichtempfänger 14 angeordnet, mit dem die Lichtintensität festgestellt wird. Der Oeffnungswinkel
des nutzbaren Lichtbündels ist ϴ1. Der punktförmige Lichtempfänger 14 detektiert nur einen kleinen Teil der im Lichtleitkörper auffallenden Lichtmenge.

Zum Schutz des Lichtempfängers 14 ist die Aussenseite des
Lichtleitkörpers 12 mit einer Schutzkappe 15 abgedeckt. Die
Lichtquelle 13 beim anderen Lichtleitkörper 11 ist durch
eine Schutzhülse 16 abgedeckt, auf der ein Schlauch 17
dichtend befestigt ist. Durch diesen Schlauch 17 wird die
Lichtquelle 13 mit Energie versorgt und die Information vom
Lichtempfänger 14 wird mittels elektrischer Leitungen, die
ebenfalls in diesem Schlauch angeordnet sind, geleitet. Die
Verbindung zwischen der Hülse 16 und der Haube 15 kann im
Zentrum der beiden Lichtleitkörper 11, 12 und des Mittelteils
10 erfolgen. Aber auch umfangsseitig angeordnete Verbindungen
sind denkbar.

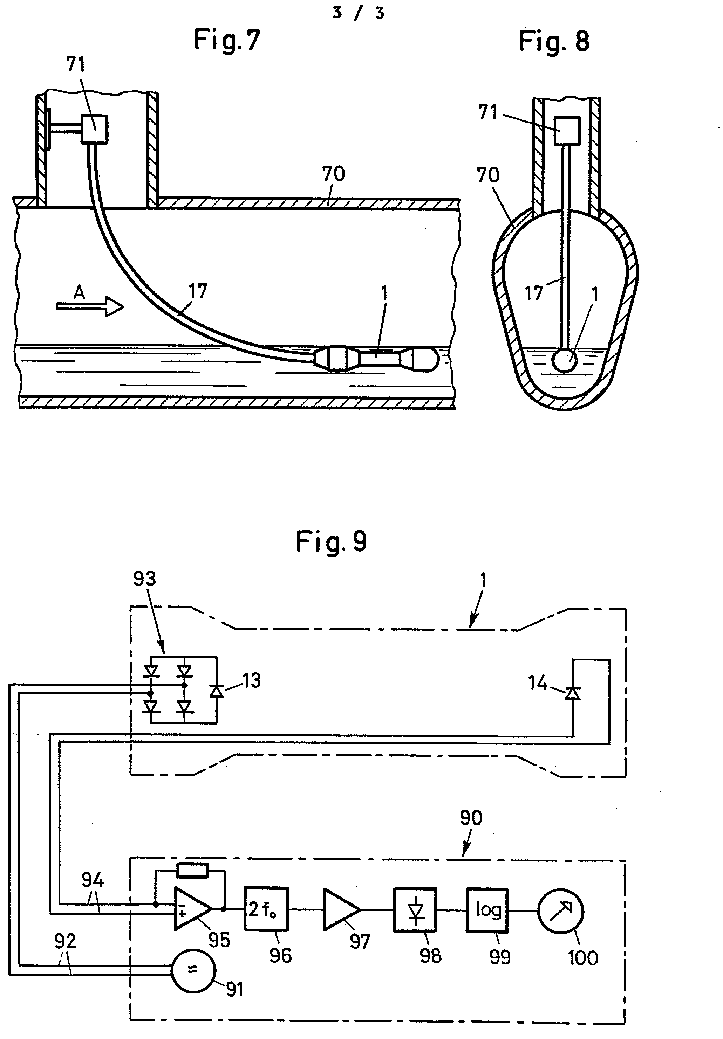

Wird eine solche Sonde 1 gemäss Fig. 7 und 8 in einen Abwasserkanal 70 eingehängt, so schwimmt die Sonde 1 in Fliessrichtung des Wassers gemäss Pfeil A vom Ort der Aufhängung 71,
soweit wie der Schlauch 17 zulässt, weg. Die Sonde 1 liegt
nahe an der Wasseroberfläche und passt sich den wechselnden Füllhöhen an. Durch die Schleppwirkung des Wassers bleibt die Sonde überdies an der Stelle mit grösster Strömung.

Gemäss der Ausführungsform nach Fig. 2 kann ein flächenförmig ausgebildeter Lichtempfänger bei gleichem Oeffnungswinkel $\theta 1$ praktisch alle auf der Fläche 221 auftreffenden Strahlen S3 detektieren.

Die Sonde 3 gemäss Fig. 3 hat wieder denselben Aufbau wie die vorbeschriebenen Sonden 1 und 2. Nur sind hier Austrittfläche 312 und Eintrittsfläche 322 als torodiale Flächen 18 dargestellt, dass die am zylindrischen Mittelteil 30 entlanggeführte Strahlung S2 ein paralleles Lichtbündel ergibt, und an der Eintrittsfläche 322 in einem Punkt, an dem sich der Lichtempfänger 34 befindet, gebrochen wird.

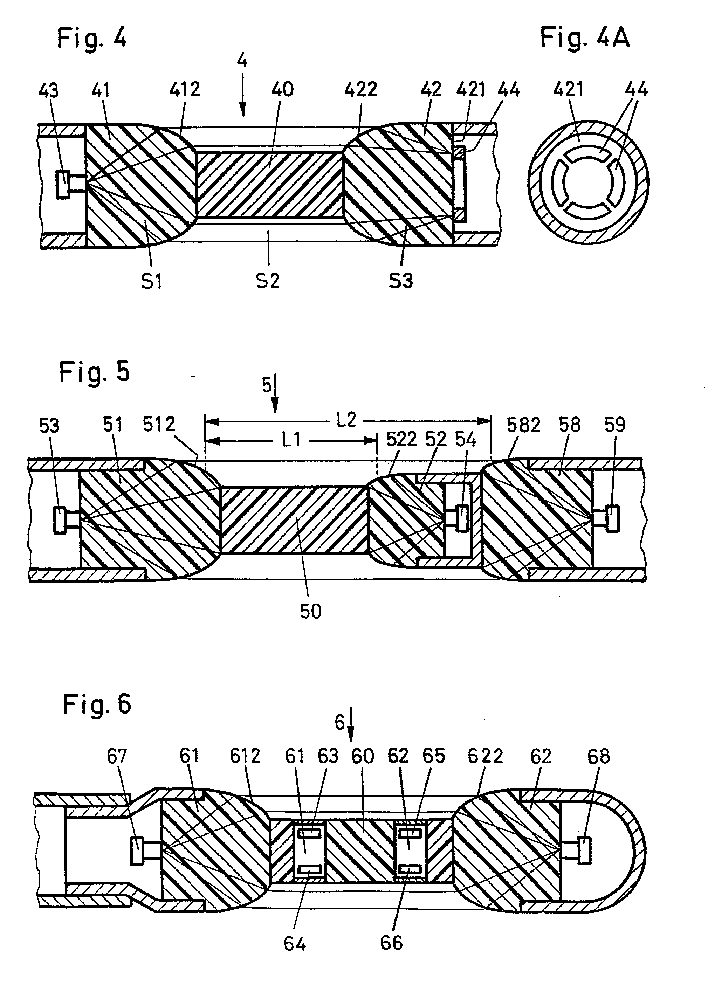

Die Sonde 4 gemäss Fig. 4 und 4a hat wieder denselben Aufbau wie die vorbeschriebenen Sonden 1 - 3, lediglich ist die Fläche 421 so aus dem Brennpunkt verschoben, dass die Strahlung S3 die Lichtquelle 43 auf der Fläche 421 als Ring abbilden. Dementsprechend kann der Lichtempfänger 44 auch ringförmig ausgebildet sein und er könnte zusätzlich noch segmentiert sein. Eine solche Unterteilung erlaubt es, aus einem Vergleich der Einzelsignale eine weitere Information

zu gewinnen, um daraus auf Ungleichmässigkeiten in der örtlichen Verteilung der Trübung zu schliessen. Ferner bietet eine solche Unterteilung eine grössere Zuverlässigkeit der Messung bei einer allfälligen Blockierung einer Partie des Strahlenganges, wenn der Spiegel des Abwassers in Fig. 7 und 8 absinken sollte und eine Sonde 4 auf Steine oder Schlamm zu liegen kommen sollte.

Bei der Sonde 5 in Fig. 5 sind empfangsseitig zwei Lichtleitkörper 52 und 58 vorhanden, denen je ein Lichtempfänger 54 und 59 zugeordnet ist. Diese beiden Lichtleitkörper 52, 58 unterteilen den vom Lichtleitkörper 51 abgegebenen Strahlengang. Damit können zwei Messstrecken von unterschiedlichen Längen L1 und L2 gebildet werden. Durch eine solche Anordnung kann die Trübung auch bei verschmutzten Austrittsflächen 512 und Eintrittsflächen 522 und 582 gemessen werden, wenn davon ausgegangen wird, dass beide Eintrittsflächen 522 und 582 gleichermassen verschmutzt sind.

Eine weitere Variante mit einer Sonde 6 ist in Fig. 6 dargestellt. Ausgehend von der Form gemäss Fig. 1 ist der Mittelteil 60 nicht mehr durch einen kompakten lichtundurchlässigen Körper gebildet, sondern in zwei im Abstand voneinander angeordneten Oeffnungen 61, 62 befinden sich noch zusätzliche Lichtempfänger 63, 64, 65 und 66.

Die Lichtstrahlung S2, die vom Lichtgeber 67 abgegeben wird, wird ja bekanntlich durch Partikeln, die die Trübung verursachen, gestreut. Durch die in den Oeffnungen 61, 62 angeordneten Lichtempfänger 63, 64, 65 und 66 kann dieses gestreute Licht gemessen werden.

Schliesslich zeigt noch Fig. 9 ein Blockschema für den Betrieb einer solchen Sonde gemäss den Fig. 1 bis 4 mit nur einem einzigen Lichtempfänger.

Die Sonde 1 umfasst eine Lichtquelle 13 und einen Lichtempfänger 14. Als Lichtquelle 13 dient eine lichtemittierende Diode und als Lichtempfänger eine Photodiode.

Der Lichtquelle 13 wird als Speisung ein sinusförmiger Wechselstrom der Frequenz $f_o$ aus einem Oszillator 91 über eine zweiadrige Leitung 92 und eine Gleichrichterbrückenschaltung 93 zugeleitet. Durch die Gleichrichtung pulsiert dann das abgestrahlte Licht mit der doppelten Frequenz $2f_o$ und damit auch der Photostrom in der zweiadrigen Leitung 94 von der Photodiode 14 zurück zur Schaltungsanordnung 90. Nach der Verstärkung dieser Information in einem rückgekoppelten Operationsverstärker 95 wird die Schwingung mit der Grundfrequenz $2f_o$ in einem Filter 96 ausgefildert und nach nochmaliger Verstärkung in einem Verstärker 97 erfolgt
Gleichrichtung der Signale in einem Gleichrichter 98 und
Linearisierung in einer Logarithmierungsstufe 99, bevor die
Anzeige in einem Instrument 100 erfolgt.

Patentansprüche

1.      Sonde zur Ueberwachung der Trübung in Medien unter
Verwendung einer Messanordnung zur Messung einer Veränderung
bezüglich der Lichtintensität an Lichtempfängern infolge gelösten oder suspendierten Stoffen, dadurch gekennzeichnet,
dass die Sonde (1 - 6) als Schwimmkörper mit zylindrischem
Mittelteil (10; 20; 30; 40; 50; 60)  und mit beidseits an
diesen Mittelteil anschliessenden Lichtleitkörpern (11, 12;
21, 22; 31, 32; 41, 42; 51, 52, 58; 61, 62) mit grösserem
Durchmesser als der Mittelteil und mit einer umlaufenden,
gegen den Mittelteil hin geneigten Fläche (112,122; 212,222; 312,
322; 412, 422; 512, 522; 612, 622) ausgebildet ist, und dass
wenigstens eine Lichtquelle (13, 23, 33, 43, 53, 67) beim
einen Lichtleitkörper (11, 21, 31, 41, 51, 61) zur Abgabe
wenigstens eines diskreten Lichtbündels (S1) entlang dem
Mittelteil, und wenigstens einen Lichtempfänger (14, 23, 34,
44, 54, 59, 68) beim gegenüberliegenden Lichtleitkörper (12, 22, 32, 42, 52, 58, 62) und ferner ein Haltemittel (71) für die Sonde mit Verbindungsleitungen zur Versorgung der Lichtquelle mit Energie und zur Uebertragung der Information aus dem Lichtempfänger zu einer Auswerteeinrichtung (40) vorhanden sind.

2.      Sonde nach Patentanspruch 1, dadurch gekennzeichnet, dass die Lichtleitkörper (11, 12; 21, 22; 31, 32; 41, 42; 51, 52, 58; 61, 62) aus lichtdurchlässigem Material bestehen, und dass die gegen den Mittelteil (10, 20, 30, 40, 50, 60) geneigten Flächen (112, 122; 212, 222; 312, 322; 412, 422; 512, 522, 582; 612, 622) zur Lichtbrechung der Lichtbündel im Strahlengang von der Lichtquelle (13, 23, 33, 43, 55, 67) zum Lichtempfänger (14, 24, 34, 44, 54, 59, 68) ausgebildet sind.

3.      Sonde nach Patentanspruch 2, dadurch gekennzeichnet, dass die geneigte Fläche (112, 122, 212, 222) die Mantelfläche eines Kegelstumpfes ist (Fig. 1, 2).

4.      Sonde nach Patentanspruch 2, dadurch gekennzeichnet, dass die geneigte Fläche (312, 322; 412, 422; 512, 522, 582; 612, 622) torodial ausgebildet ist (Fig. 3 - 6).

- 13-

5.      Sonde nach einem der vorangehenden Patentansprüche 1 bis 4, dadurch gekennzeichnet, dass der Mittelteil (60) als lichtundurchlässiger Körper ausgebildet ist und auf dem Umfang verteilt angeordnete lichdurchlässige Stellen (61, 62) als Fenster für Lichtempfänger (63 - 66) zur Aufnahme von Streulicht aufweist (Fig. 6).

6.      Sonde nach einem der vorangehenden Patentansprüche 1 bis 5, dadurch gekennzeichnet, dass einerseits des Mittelteils (50) wenigstens ein weiterer Lichtleitkörper (58) vorhanden ist, dass der näher am Mittelteil (50) angeordnete erste Lichtleitkörper (52) einen kleineren Durchmesser aufweist, als der daneben befindliche zweite Lichtleitkörper (58), der wenigstens angenähert denselben Durchmesser aufweist, wie der erstgeannnte Lichtleitkörper (51) auf der anderen Seite des Mittelteils (50), und dass jedem der beiden empfangsseitigen Lichtleitkörper (52, 58) ein Lichtempfänger (54, 59) zugeordnet ist, um zwei unterschiedlich lange Messstrecken (L1, L2) zu bilden (Fig. 5).

7.      Sonde nach einem der Patentansprüche 1 bis 6, dadurch gekennzeichnet, dass als Lichtempfänger (24) eine flächenhafte Photodiode verwendbar ist (Fig. 2).

8.      Sonde nach einem der Patentansprüche 1 bis 6, dadurch gekennzeichnet, dass als Lichtempfänger wenigstens eine ringförmig angeordnete Photodiode (44) verwendet ist (Fig. 4).

9.      Sonde nach Patentanspruch 8, dadurch gekennzeichnet, dass die ringförmig angeordneten Photodioden (44) als Ringsegmente ausgebildet sind (Fig. 4).

10.      Verwendung der Sonde nach Patentanspruch 1, zur Bestimmung der Trübung von Abwässern (Fig. 7, 8).

0126031

1 / 3

**Fig. 1**

**Fig. 2**

**Fig. 3**

**Fig. 4**

**Fig. 4A**

**Fig. 5**

**Fig. 6**

Fig. 7

Fig. 8

Fig. 9